**Europäisches Patentamt**

**European Patent Office**

**Office européen des brevets**

(11) Veröffentlichungsnummer: **0 409 138 A1**

# EUROPÄISCHE PATENTANMELDUNG

(21) Anmeldenummer: 90113605.1

(22) Anmeldetag: 16.07.90

(51) Int. Cl.⁵: **A23C 1/00, A23C 1/03, A23C 1/04, A23C 9/00**

(30) Priorität: 17.07.89 DE 3923581

(43) Veröffentlichungstag der Anmeldung:
23.01.91 Patentblatt 91/04

(84) Benannte Vertragsstaaten:
AT BE CH DE FR GB IT LI NL

(71) Anmelder: **Müller, Manfred**
**Pfenders 4**
**D-7964 Kisslegg(DE)**

(72) Erfinder: **Müller, Manfred**
**Pfenders 4**
**D-7964 Kisslegg(DE)**

(74) Vertreter: Weber, **Joachim et al**
**Schoppe, Schmitz, Weber, Patentanwälte**
**Ludwig-Ganghofer-Strasse 20**
**D-8022 Grünwald/München(DE)**

(54) Verfahren zur Herstellung von Ziegenmilchpulver aus Ziegenvollmilch.

(57) Die Erfindung bezieht sich auf ein Verfahren zur Herstellung von Ziegenmilchpulver aus Ziegen-Vollmilch. Die Verabreichung und Handhabung von Ziegenmilch in flüssiger Form erweist sich als schwierig, sodaß es wünschenswert ist, Milchpulver aus der Ziegenmilch herzustellen. Die bisher bekannten Verfahrensschritte, welche bei Kuhmilch angewandt werden, sind jedoch nicht praktikabel. Erfindungsgemäß wird deshalb vorgeschlagen, daß mittels einer Zentrifuge Magermilch erzeugt wird, welche nachfolgend mittels eines Sprühverfahrens oder eines Walzentrockungsverfahrens zu Pulver verarbeitet wird.

FIG.1

EP 0 409 138 A1

# VERFAHREN ZUR HERSTELLUNG VON ZIEGENMILCHPULVER AUS ZIEGENVOLLMILCH.

Die Erfindung bezieht sich auf ein Verfahren zur Herstellung von Ziegenmilchpulver aus Ziegen-Vollmilch

Ziegenmilch wird seit langer Zeit aus gesundheitlichen Gründen konsumiert, da bestimme gesundheitsfördernde Wirkungen oder Heilwirkungen dem Genuß von Ziegenmilch zugeschrieben werden. In früheren Zeiten war es, insbesondere für die ländliche Bevölkerung, kein Problem, frische Ziegenmilch zu erwerben. Durch die verstärkte kommerzialisierung der Landwirtschaft und durch die Bildung großstädtischer Ballungsräume ist es jedoch kaum noch möglich, den Verbraucher mit frischer Ziegenmilch zu versorgen. Es besteht deshalb ein aktuelles Bedürfnis, Ziegenmilch in einer Form an den Verbraucher zu liefern, welche eine einfache Lagerung und Handhabung ermöglicht, andrerseits jedoch die vorteilhaften Wirkungen der Ziegenmilch nicht beeinträchtigt.

Aus dem Stand der Technik ist es bekannt, Kuhmilch in Pulverform zu verarbeiten, sei es für Zwecke der menschlichen Ernährung oder für Futterzwecke. Kuh-Pulvermilch kann beispielsweise als Babynahrung verwendet werden oder zum Zugeben in Kaffee dienen. Zur Verarbeitung von Kuhmilch, welche auch als Magermilch pulverisiert werden kann, dienen Anlagen, welche Trocknungswalzen oder Sprühtürme umfassen.

Die Pulverisierung von Ziegenmilch ist jedoch bisher kaum bekannt, da Ziegenmilch, bedingt durch ihre chemische Zusammensetzung, in der für Kuhmilch üblichen Verfahrensweise nicht pulverisiert werden kann. Es wurden deshalb Versuche unternommen, die Ziegenmilch gefrierzutrocken oder durch Kuhmilch zu verdünnen, um sie nachfolgend in einem Sprühturm zu pulverisieren. Die Gefriertrocknung weist den Nachteil auf, daß das Verfahren sehr aufwendig ist und somit kein Ziegenmilchpulver zu marktgängigen Preisen hergestellt werden kann. Die Verdünnung scheidet für die oben angegebenen Verwendungszwecke aus, da dabei die gesundheitsfördernde oder heilende Wirkung der Ziegenmilch nicht zu beobachten ist.

Der Erfindung liegt die Aufgabe zugrunde, ein Verfahren zur Herstellung von Ziegenmilchpulver zu schaffen, welches bei einfacher Ausgestaltung und einfacher Handhabbarkeit die Erzeugung von Ziegenmilchpulver gestattet, welches die vorteilhaften Eigenschaften der Ziegenmilch beinhaltet und einfach und problemlos gelagert, gehandhabt und konsumiert werden kann.

Erfindungsgemäß wird die Aufgabe dadurch gelöst, daß mittels einer Zentrifuge Ziegen-Magermilch erzeugt wird, welche nachfolgend mittels eines Sprühverfahren oder eines Walzentrocknungverfahrens zu Pulver verarbeitet wird.

Das erfindungsgemäße Verfahren zeichner sich durch eine Reihe erheblicher Vorteile aus. Erfindungsgemäß ist es erstmals möglich geworden, Ziegenmilchpulver zu erzeugen, welches über einen langen Zeitraum lagerbar ist und insbesondere nicht feucht wird und nicht klumpt.

In einer besonders günstigen Ausgestaltung der Erfindung ist vorgesehen, daß die Magermilch auf eine Temperatur von im wesentlichen 40°C erwärmt und nachfolgend auf die Walzen eines Zweiwalzentrockners aufgebracht wird. Die Vorwärmung der Magermilch auf eine Temperatur von im wesentlichen 40°, welche bevorzugterweise über einen Zeitraum von 30 Minuten aufrechterhalten wird, gestattet eine schonende Vorbereitung der Magermilch, sodaß abrupte Temperaturererhöhungen beim Aufbringen auf die Walzen des Walzentrockners vermieden werden. Dies verhindert Beeinflussungen der Eiweißstrukturen sowie ein Anbrennen der Milch auf den Walzen. Weiterhin erweist sich die Vorwärmung auf eine Temperatur von im wesentlichen 40° hinsichtlich der Bakterienvermehrung als besonders günstig.

Weiterhin ist es erfindungsgemäß besonders vorteilhaft, die Walzen des Zweiwalzentrockners auf eine Temperatur vorzuwärmen, welche in einem Bereich von zwisschen 65 bis 72°C. Dieser Temperaturbereich dient dazu, verbrannte Stellen der auf der Walze haftenden Milchmasse zu verhindern. Es hat sich erfindungsgemäß herausgestellt, daß diese Temperatur der Walzen für die Herstellung von Ziegenmilch optimale Ergebnisse liefert. Die übliche Herstellung von Kuh-Milchpulver erfolgt bei wesentlich höheren Walzentemperaturen, welche für Ziegenmilch, bedingt durch deren chemische Zusammensetzung, nicht geeignet sind.

Erfindungsgemäß wird die auf den Walzen angetrocknete Milch abgeschabt und nachfolgend zerkleinert, wobei die Zerkleinerung mittels einer Mühle oder eines Wolfes erfolgen kann. Dabei ist es erfindungsgemäß besonders günstig, Temperturerhöhungen der Milchpartikel bei der Zerkleinerung zu vermeiden, da die Erwärmung des Pulvers zu einer Verfestigung des Endproduktes führen kann, durch welche sowohl die nachfolgende Weiterverwendung und Applikation behindert als auch eine Beeinträchtigung des Zerkleinerungsvorganges erfolgen kann.

Erfindungsgemäß ist es auch möglich, die Magermilch im Vakuum zu erhitzen und auf eine Trockenmasse von im wesentlichen 45 % zu reduzieren. Nachfolgend wird erfindungsgemäß die Magermilch von

# EP 0 409 138 A1

mindestens von 24 Stunden zwischengelagert und anschließend in einem Sprühturm bei einer Temperatur von im wesentlichen 85°C zu Pulver verarbeitet. Die Zwischenlangerung der Magermilch erfolgt bevorzugterweise zum Zwecke der Auskristallisierung. Mit den erfindungsgemäßen Verfahrensschritten ist es möglich, Milchpulver zu erzeugen, welches bei Lagerung nicht oder in nur unerheblichen Umfang feucht wird und deshalb auch einer Langzeitlagerung unterworfen werden kann.

Erfindungsgemäß ist es günstig, die Ziegenmagermilch in dem ersten Verfahrensschritt auf eine Trockenmasse von 5,2 % zu reduzieren. Es ist jedoch auch möglich, erfindungsgemäß auf die vorherige Herstellung von Magermilch zu verzichten und direkt die Ziegenvollmilch zu verwenden.

Für den Fall, daß erfindungsgemäß eine Entrahmung der Ziegenmilch vorzunehmen ist, so erfolgt diese bevorzugterweise unmittelbar nach dem Melken. Weiterhin ist es erfindungsgemäß möglich die durch den Melkvorgang gewonnen Milch bei einer Temperatur von etwa 6° zwischenzulagern.

Das nach dem erfindungsgemäßen Verfahren gewonnene Milchpulver kann in günstiger Ausgestaltung mit Zusätzen versehen werden, es ist jedoch auch möglich, diese Zusätze direkt der als Ausgangsprodukt dienenden Milch zuzugeben. So ist es beispielsweise möglich Kampfer in Pulverform beizumischen, beispielsweise in einem Prozentsatz von 0,05.

Die beiden erfindungsgemäß vorgeschlagenen Verfahrensvarianten gestatten es, die gemolkene Ziegenmilch bis zu 24 Stunden zwischenzulagern, ohne daß hierdurch Beeinträchtigungen der Verfahrensabläufe und /oder des Endprodukts zu beobachten wären.

Im folgenden wird die Erfindung in Verbindung mit der Zeichnung anhand zweier Ausführungsbeispiele von hierzu geeigneten Vorrichtungen beschrieben. Dabei zeigt:

Figur 1 eine schematische Anordnung der einzelnen für eine Walzentrocknung zu verwendenden Geräte,

Figur 2 eine schematische Anordnung der Geräte für eine Sprühturmtrocknung und

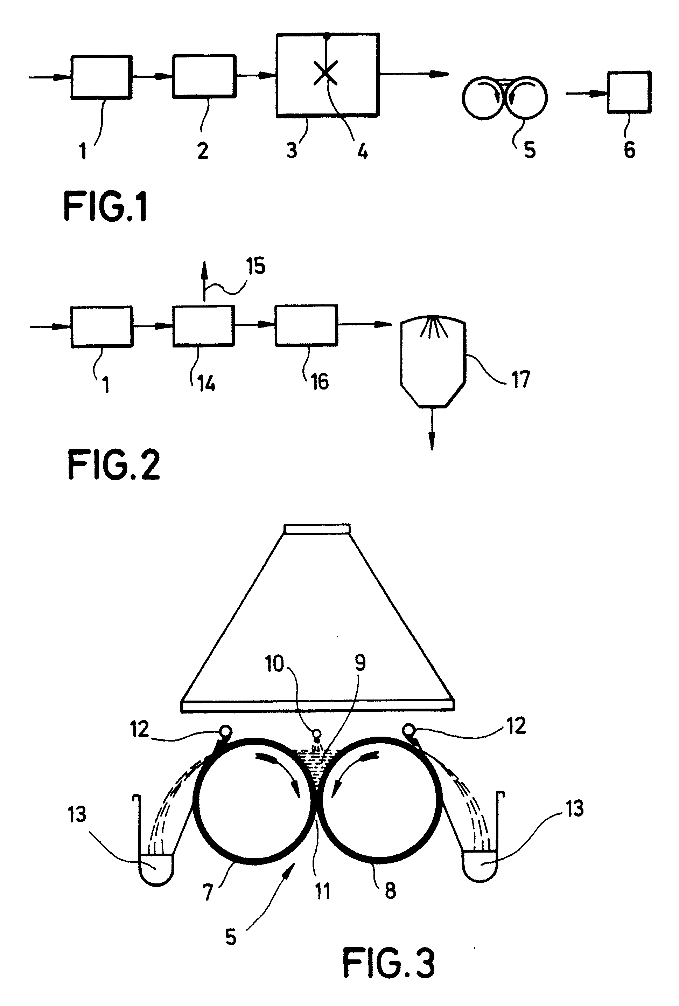

Figur 2 eine Detailansicht einer erfindungsgemäßen Walzentrocknungsanlage.

Die in Fig. 1 dargestellte Anordnung umfaßt eine Anordnung 1 zur Entrahmung der zugeführten Ziegen-Vollmilch, welche beispielsweise in Form einer üblichen Zentrifuge ausgebildet sein kann. Nachfolgend wird die Ziegen-Magermilch in einer Kühleinrichtung 2 zwischengelagert, wobei die Zwischenlagerung bevorzugterweise bei einer Temperatur von 6°C und über einen Zeitraum von maximal 24 Stunden erfolgt.

Die zwischengelagert Ziegen-Magermilch wird anschließend in eine Erwärmungseinrichtung 3 überführt, in welcher sie auf eine Temperatur von 40°C erwärmt wird. Bevorzugterweise erfolgt die Erwärmung mittels Dampf, welcher durch die Erwärmungseinrichtung 3 geleitet wird. Die Erwärmungseinrichtung 3 kann weiterhin mit einem Rührwerk 4 versehen sein, um eine gleichmäßige Wärmeeinbringung in die Magermilch sicherzustellen.

Die auf 40°C erwärmte Magermilch wird nachfolgend einem Walzentrockner 5 zugeführt, welcher nachfolgend im einzelnen anhand der Figur 3 beschrieben werden wird. Die von dem Walzentrockner 5 abgeführte trockene Milchmasse wird nachfolgend einer Zerkleinerungseinrichtung 6 zugeführt, welche in Form einer Mühle oder eines Wolfes ausgebildet sein kann. Nachfolgend wird das so erhaltene Milchpulver konfektioniert und abgefüllt. Weiterhin ist es möglich, dem Zusätze beizufügen, beispielsweise Kampfer in einer Menge von 0,05 %.

Die Fig. 3 zeigt den in Fig. 1 nur schematisch wiedergegebenen Zwei-Walzentrockner. Dieser umfaßt zwei Walzen 7, 8, welche in geeigneter Weise gegensinnig angetrieben und parallel zueinander gelagert sind. Zwischen den Walzen wird ein Sumpf 9 aufrecht erhalten, in welchen die vorerwärmte Magermilch durch eine Leitung 10 eingeführt wird. Die Verweildauer in dem Sumpf 9 hängt von der Größe des Sumpfes ab und schwankt zwischem einem Zeitraum von 10 bis 20 Sekunden.

Die beiden Walzen 7, 8 werden durch Dampf erhitzt, sodaß die durch den Spalt 11 zwischen den beiden Walzen 7, 8 durchtretende Milchmasse, welche auf der Oberfläche der Walzen 7, 8 haftet, nachfolgend durch Messer 12 abgeschabt werden kann. Die Milchmasse fällt nachfolgend in Sammelbehälter 13.

Nach der restlichen Abkühlung werden die in den Sammelbehältern 13 befindlichen Milchpartikel (Grobpulver) der Zerkleinerungseinrichtung 6 zugeführt.

Die Walzen 7, 8 des Walzentrockners werden mittels einer nicht dargestellten Dampfanlage erhitzt, welche einen Betriebsdruck von 10 bar bereitstellt. Die unmittelbare Erhitzung der Milch beträgt ca. 65°C und reicht aus, um die Ziegenmilch auf den Walzen 7, 8 anzutrocknen. Bevorzugterweise wird ein DAmpfdruck von 7 bar während des Betriebs aufrechterhalten, wobei die Drehzahl der Walzen bei 30/Minute liegen kann. Die Quadratmeterleistung der Walzen 7,8 ist so ausgelegt, daß pro Stunde etwa 5 kg Trockengut erzeugt werden können. Die Filmstärke des Produkts auf den Walzen 7,8 beträgt 0,2 mm, es wird bevorzugterweise eine Sumpfbreite von 30 cm verwendet. Der Spalt zwischen den beiden Walzen beträgt günstigerweise 0,15 mm.

Bei dem erfindungsgemäßen Walzentrockner ist es nicht erforderlich, zusätzliche seitliche Auftragswalzen zu verwenden, sowie dies aus der Pulverherstellung von Kuhmilch bekannt ist.

Nachfolgend werden einzelne Beispiele für vorteilhafte Betriebsparameter aufgeführt. Es wurde dabei entrahmte Ziegenmilch mit einer Trockensubstanz von 5,5 % in einem Zweiwalzentrockner verarbeitet. Die Walzenabmessungen betrugen 500 x 500 mm, wobei das Walzenmaterial Grauguß bestand. Die Ziegenmilch wurde im Sumpf zwischen den beiden Walzen aufgetragen.

| | Beisp. 1 | Beisp. 2 | Beisp.3 |
|---|---|---|---|
| Dampfdruck (bar) | 7 | 4 | 3 |
| Drehzahl (Upm) | 14 | 30 | 30 |
| Spalteinstellung (mm) | 0,15 | 0,15 | 0,15 |
| Sumpfbreite (mm) | 150 | 30 | 20 |
| Filmstärke (mm) | 0,2 | 0,22 | |
| qm-Leistung (kg/m²/h) | 7,2 | 5,1 | 3,6 |
| Die qm-Leistung ist angegeben in Trockenware. | | | |

Erfindungsgemäß war es beispielsweise möglich, Ziegenmilchpulver mit einem Fettgehalt von 1,45% und einem Gesamteiweißgehalt von (f = 6,38) von 32,53 % herzustellen.

Das erfindungsgemäße Ziegenmilchpulver ist über einen langen Zeitraum lagerbar, ein bakteriologisches Untersuchungsergebnis lieferte für ein ml Ziegenmilchpulver bei einer Lagerung über einen Zeitraum von 48 Stunden bei einer Temperatur von 30°C eine Gesamtkeimzahl von 11.000.

in Fig. 2 ist eine schematische Anordnung dargestellt, bei welcher die Herstellung des Ziegenmilchpulvers in einem Sprühturm erfolgt. Die Einrichtung umfaßt wiederum eine Entrahmungseinrichtung 1 (Zentrifuge). Nachfolgend wird die Milch einer Konzentrationseinrichtung 14 zugeführt, in welcher unter Vakuum der Magermilch Wasser entzogen wird, insbesondere durch Entdampfungsvorgänge. Wie durch den Fall 15 schematisch dargestellt, wird das entzogene Wasser abgeführt. Nachfolgend wird die konzentrierte Ziegenmilch zwischengelagert, sodaß diese auskristallisieren kann. Die auf eine Trockenmasse von im wesentlichen 45% reduzierte Milchmasse wird dabei über einen Zeitraum von mindestens 24 Stunden zwischengelagert. Nachfolgend wird die Milch in einem Sprühturm 17 überführt, in welchem sie unter Vakuum versprüht wird. Der Sprühturm 17 ist in üblicherweise ausgebildet und weist beispielsweise eine Doppelwandung auf, durch welche Dampf geleitet wird, um die Milch bei einer Temperatur von im wesentlichen 85° zu pulverisieren. Nachfolgend wird die Milch einer Verpackungseinrichtung, welche in Fig. 2 nicht im einzelnen dargestellt ist, zugeführt.

Die Erfindung ist nicht auf das gezeigte Ausführungsbeispiel beschränkt, vielmehr ergeben sich im Rahmen der Erfindung vielfältige Abwandlungs- und Modifikationsmöglichkeiten.

## Ansprüche

1. Verfahren zur Herstellung von Ziegenmilchpulver aus Ziegen-Vollmilch, dadurch gekennzeichnet, daß mittels einer Zentrifuge Ziegen-Magermilch erzeugt wird, welche nachfolgend mittels eines Sprühverfahrens oder eines Walzentrocknungsverfahrens zu Pulver verarbeitet wird.

2. Verfahren nach Anspruch 1, dadurch gekennzeichnet, daß die Magermilch auf eine Temperatur von im wesentlichen 40°C erwärmt und nachfolgend auf die Walzen eines Zweiwalzentrockners aufgebracht wird.

3. Verfahren nach Anspruch 2, dadurch gekennzeichnet, daß die Magermilch über eine Zeitdauer von annähernd 30 Minuten auf der Vorwärmtemperatur gehalten wird.

4. Verfahren nach einem der Ansprüche 2 oder 3, dadurch gekennzeichnet, daß die Walzen auf eine Temperatur in einem Bereich zwischen 65°C und 72°C erwärmt werden.

5. Verfahren nach einem der Ansrpüche 2 bis 4, dadurch gekennzeichnet, daß die auf den Walzen angetrocknete Magermilch abgeschabt und die so erhaltenen Partikel nachfolgend zerkleinert werden.

6. Verfahren nach Anspruch 5, dadurch gekennzeichnet, daß die Zerkleinerung bei niedrigen Temperaturen ohne wesentliche Erwärmung der Partikel erfolgt.

7. Verfahren nach Anspruch 5 oder 6, dadurch gekennzeichnet, daß die Zerkleinerung mittels einer Mühle vorgenommen wird.

8. Verfahren nach Anspruch 5 oder 6, dadurch gekennzeichnet, daß die Zerkleinerung mittels eines Wolfes vor genommen wird.

9. Verfahren nach Anspruch 1, dadurch gekennzeichnet, daß die Magermilch im Vakuum erhitzt und auf eine Trockenmasse von im wesentlichen 45% reduziert wird, daß die Magermilch nachfolgend über einen Zeitraum von mindestens 24 Stunden zwischengelagert wird und anschließend in einem Sprühturm bei einer Temperatur von im wesentlichen 85°C zu Pulver verarbeitet wird.

10. Verfahren nach Anspruch 9, dadurch gekennzeichnet, daß die Zwischenlagerung zur Auskristallisierung erfolgt.

11. Verfahren nach einem der Ansprüche 1 bis 10, dadurch gekennzeichnet, daß die Ziegenmagermilch in dem ersten Verfahrensschritt auf eine Trockenmasse von 5,2% reduziert wird.

12. Verfahren nach einem der Ansprüche 1 bis 11, dadurch gekennzeichnet, daß die Entrahmung der Ziegenmilch im ersten Verfahrensschritt unmittelbar nach dem Melken erfolgt.

13. Verfahren nach einem der Ansprüche 1 bis 12, dadurch gekennzeichnet, daß die Magermilch nach der Entrahmung bei einer Temperatur von 6° zwischengelagert wird.

14. Verfahren nach einem der Ansprüche 1 bis 13, dadurch gekennzeichnet, daß der Magermilch und/oder dem Magermilchpulver Zusätze zugegeben werden.

15. Verfahren nach Anspruch 14, dadurch gekennzeichnet, daß Kampfer als Zusatz zugegeben wird.

16. Verfahren nach einem der Ansprüche 1 bis 15, dadurch gekennzeichnet, daß die Pulverisierung ohne eine verhergehende Entrahmung der Ziegenmilch erfolgt.

FIG.1

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-B-1 604 957 (KESKUSOSUUSIIKE HANKKIJA) <br> * Spalte 2, Zeilen 15-50; Figuren 1,2 * <br> — — — | 1,2,5 | A 23 C 1/00 <br> A 23 C 1/03 <br> A 23 C 1/04 <br> A 23 C 9/00 |
| A | AT-B-3 183 73 (A. BRATLAND) <br> * Seite 2, Zeilen 25-39; Anspruch 1 * <br> — — — | 1,2 | |
| A | GB-A-1 423 110 (ALFA-LAVAL AKTIEBOLAG) <br> * Ansprüche 1,6 * <br> — — — | 1 | |
| A | AU-B-3 803 2 (AKTIESELSKABET NITRO ATOMIZER) <br> * Ansprüche 1,2 * <br> — — — — — | 1 | |

| RECHERCHIERTE SACHGEBIETE (Int. Cl.5) |
|---|
| A 23 C 1/00 <br> A 23 C 9/00 |

Der vorliegende Recherchenbericht wurde für alle Patentansprüche erstellt

| Recherchenort | Abschlußdatum der Recherche | Prüfer |
|---|---|---|
| Berlin | 18 Oktober 90 | SCHULTZE D |